# EUROPEAN PATENT SPECIFICATION

(11) **EP 1 648 829 B1**
(45) Date of publication and mention of the grant of the patent: **22.07.2009**
(21) Application number: 03817735.8
(22) Date of filing: 01.08.2003
(51) Int. Cl.: C02F 1/06, B01D 1/26

(54) **DESALINATION MACHINE**
ENTSALZUNGSVORRICHTUNG
MACHINE DE DESSALEMENT

(43) Date of publication of application: 26.04.2006
(73) Proprietor: Costa, Sergio Martins, Itapiruba, 88780-000 Imbituba SC (BR)
(72) Inventor: Costa, Sergio Martins, Itapiruba, 88780-000 Imbituba SC (BR)
(74) Representative: Johansson, Lars-Erik
(86) International application number: PCT/BR2003/000108
(87) International publication number: WO 2005/012184

(56) References cited:
- DE-A1- 2 950 211
- US-A- 5 853 549

## Description

Description of the Patent of Invention for "Desalination Machine".

### FIELD OF THE INVENTION

The present invention relates to a distillation process using vertical tube evaporators in a multi effect process and is applicable to desalination of sea water, brackish waters and in general to any water with dissolved solids, in order to produce fresh water for oil offshore platforms, ships, and for some arid locations, using rejected waste heat of thermal machines.

### BACKGROUND OF THE INVENTION

Multi-effect distillation (MED) process has been used in industry for juice evaporation, to concentrate a substance, production of salts and for salty and marine water distillation for fresh water production.

In the MED process, only a portion of the concentrate submitted to the heat transfer surfaces is evaporated. Each effect works in a different pressure. The remaining liquid of each effect, normally called brine, is fed to the liquid tray of the next effect or stage, where part of it flashes into vapour. Produced vapour in one effect will give up heat to boil the liquid transferred to the next effect due to the temperature difference between them.

Normally the effects or stages have evaporators located in separate chambers, requiring a pipeline for conducting vapour from one stage to the next, as shown in the US Patent numbers 3884767, 3261766 e 3021265.

DE 29 50 211 A1 discloses a device for obtaining fresh water from sea water. In this previously known device, a vertical column is divided into a number of cylindrical sections. The different sections have film evaporators in the shape of a vertical tube bundles with or without an outer shell. A receptacle is connected at its bottom to the upper plate of the evaporator of the same section (in the last section without an evaporator) and connected at its top to the lower tube plate of the evaporator of the overlying section. A throttle system is arranged in the lower part of each receptacle for allowing brine to pass from the receptacle to a second receptacle, the bottom of which is constituted by the upper tube plate of the underlying film evaporator. The device also comprises one or morse heat exchangers for preheating sea water with steam. A final condenser is arranged in the column below the last stage. In a receptacle, brine from the overlying section is collected and a lamellar separator separates droplets of brine from steam. The tube bundle of the film evaporator and the tube bundle of the heat exchanger for preheating of sea water are connected at the top to the same tube plate. The heat exchanger is arranged centrally inside the film evaporators.

### SUMMARY

Intended to improve the performance and reduce the dimensions of this kind of equipment, the present invention is developed assembling the several evaporators in a concentric disposition, using a shell and tube exchanger for the first stage and a bundle of tubes for the succeeding stages, which are inserted one inside each other. Through this constructive arrangement, the following advantages are achieved: material reduction due to the absence of vapour pipelines; vapour friction losses reduced to a minimum; smaller size due to the compactness of the concentric disposition of evaporators; no heat loss in the inner stages; cost effectiveness.

This unit can also be used to concentrate a mixture, using low temperature evaporative process.

Fresh water makers are extensively used in oil offshore platforms and ships, normally using the heat of exhausted gases of thermal machines.

The figures attached, are representative of four different models, showing their respective stages, all using the same constructive arrangement, here named concentric evaporators. The higher the number of stages the lower the energy consumption per volume produced. The choice for the number of stages, depend on the available heat, the fresh water rate desired and of course the involved costs.

The unit can be designed to produce any desired flow rate, meanwhile it is usual for this kind of equipment to have a production flow rate ranging from 5 until 120 m3/d.

The dimensions of a 60m3/d desalinator have approximately 2.2 m height and 1.2 m in diameter.

### DESCRIPTION OF THE DRAWINGS

The different models will now be exemplified with reference to the accompanying drawings briefly described hereafter.
Figures 1 to 9 are representative of the two stage model.
Figure 1 is the elevation view in cross section of the two stage model totally assembled;
Figure 2 is the top view of the first stage evaporator here named Ring Shell and Tube Evaporator;
Figure 3 is the elevation view in cross section of the Ring Shell and Tube Evaporator;
Figure 4 is the top view of the second stage evaporator, here named Cylindrical Bundle Evaporator, that is the ultimate stage;
Figure 5 is the elevation view in cross section of the Cylindrical Bundle Evaporator;
Figure 6 is the bottom view of the floating head of the Cylindrical Bundle Evaporator;
Figure 7 is the top view of the condenser inserted into the superior chamber;
Figure 8 is the elevation view in cross section of the condenser;
Figure 9 is the condenser front view;
Figures 10 to 15 are representative of the three stage model;

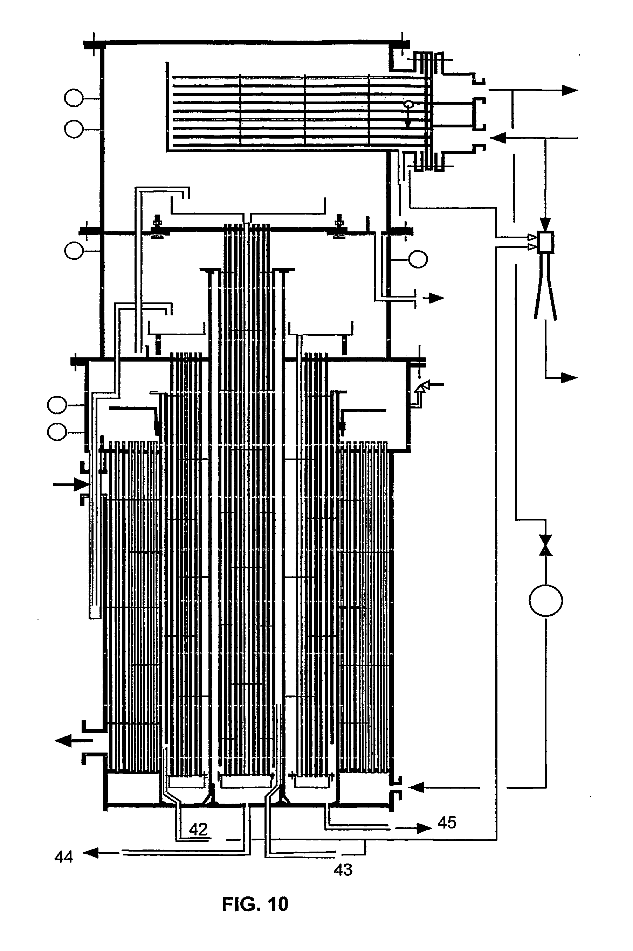

Figure 10 is the elevation view in cross section of the three stage model totally assembled;

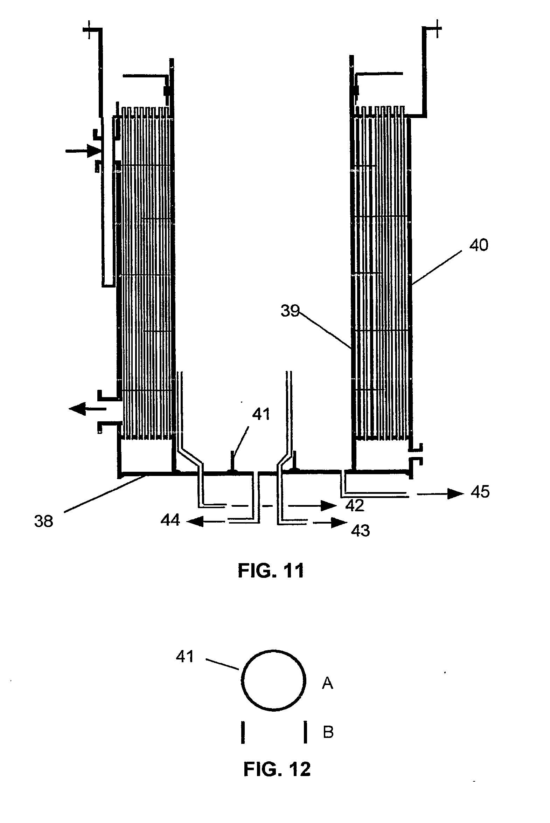

Figure 11 is the elevation view in cross section of the first stage of the three stage model, or the Ring Shell and Tube Evaporator;
Figure 12 is the base support for intermediate stage, where A is the top view and B is a cross section view;

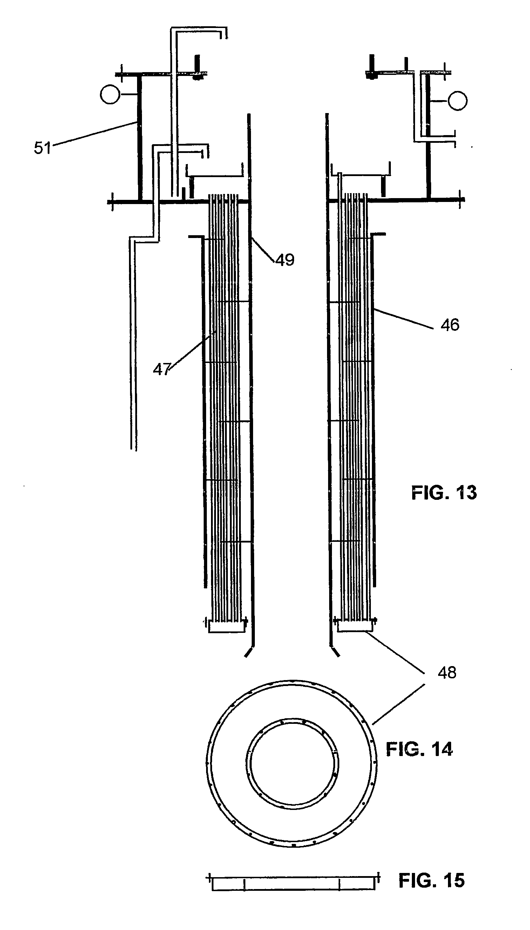

Figure 13 is the elevation view in cross section of the intermediate stage, here named Ring Bundle Evaporator;
Figure 14 is the bottom view of the floating head of the Ring Bundle Evaporator;
Figure 15 is the cross section of figure 14;

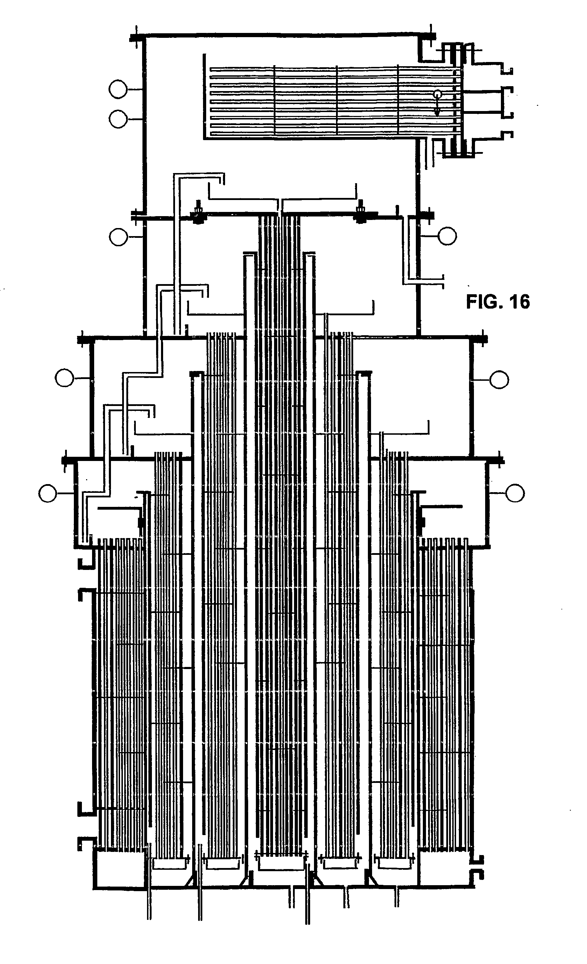

Figure 16 is the elevation view in cross section of the four stage model.

### DETAILED DESCRIPTION OF THE INVENTION

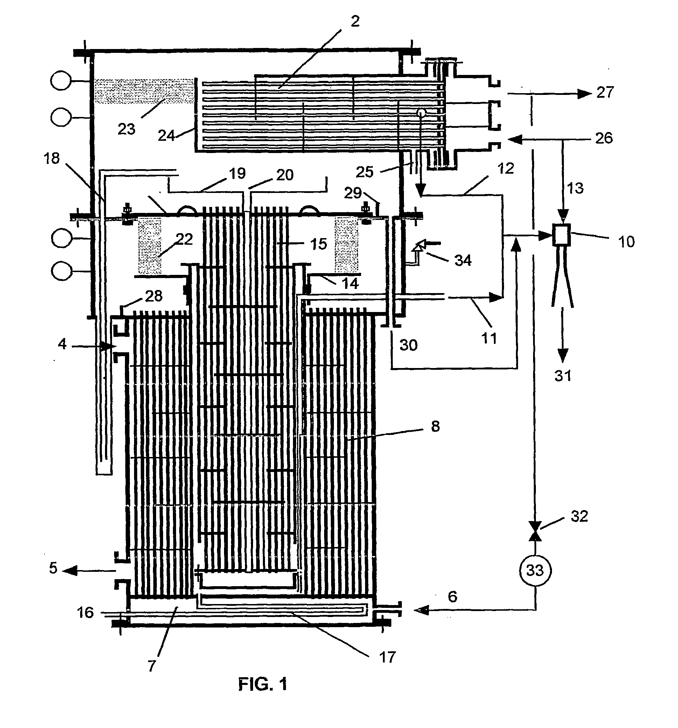

The following description is refereed to figures 1 to 9, all related to the two stage model, whose operational philosophy is extensive to the other models.

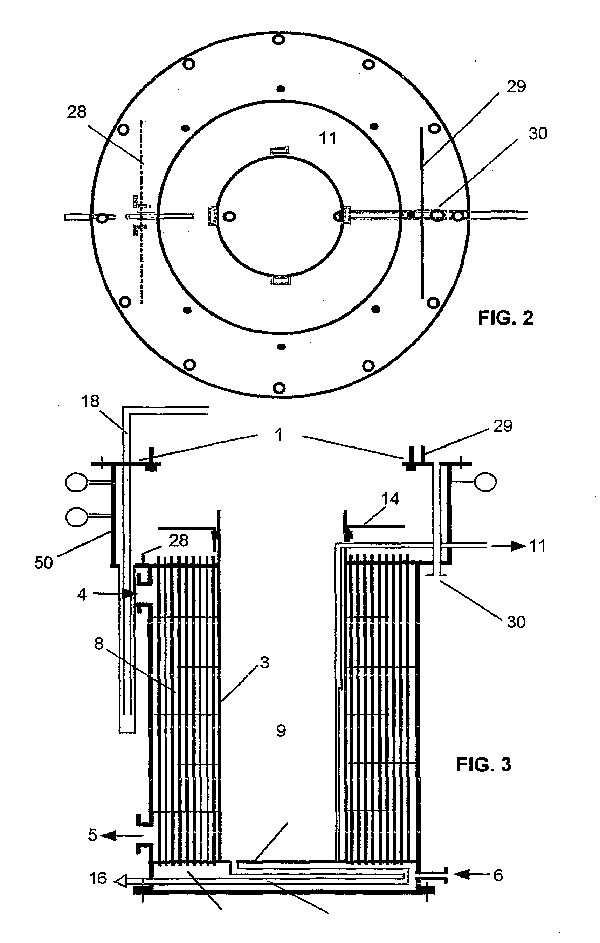

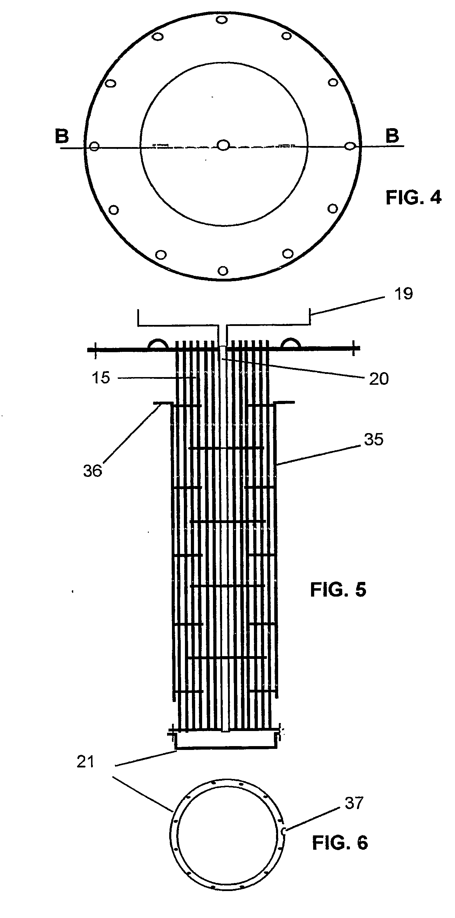

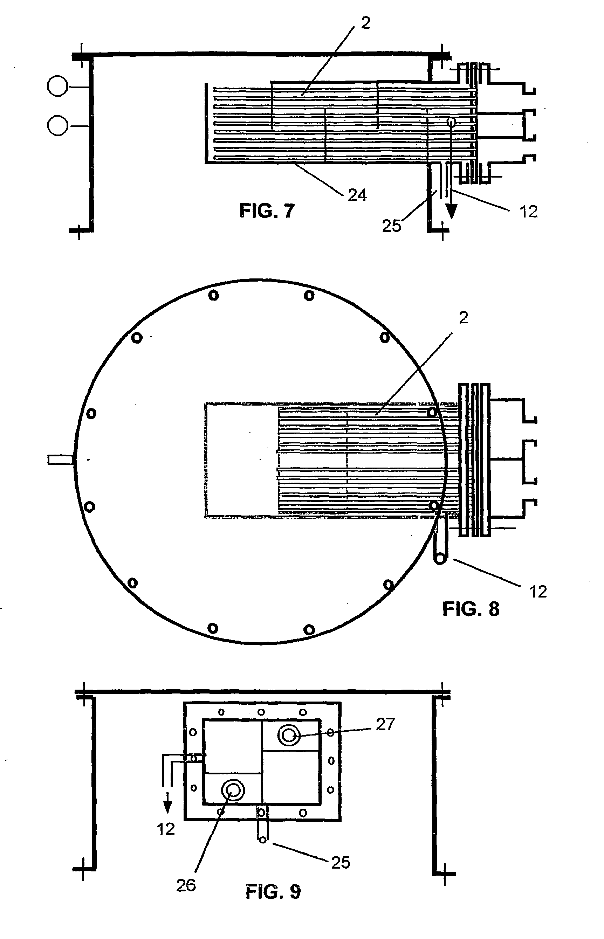

Figure 1 shows the two stage model with its evaporators assembled in the concentric arrangement where is observed that the second stage (Fig. 5) is assembled inside the first stage (Fig. 3), supported and bolted at the flange 1 (Fig 3). A gasket is used to avoid leakage. The upper chamber (Fig. 7) with the condenser 2 inserted into it, is assembled bolted in the same flange 1.

On figures 2 and 3, is observed that the first stage is constituted of a shell and tube exchanger without part of the central tubes, here called Ring Shell and Tube Evaporator. The inner wall 3 encloses the hot water throughout the interior of the shell, returning for heating on outlet 5.

Salt water feeds the first stage on nozzle 6, passing throughout the chamber 7, and directs to the first stage tubes 8, receiving enough heat from hot water 4, until boiling. Heat is furnished so that only part of the water is vaporised in order to avoid excessive scales into the tubes. It is observed on figure 2 that the vapour chamber above the evaporator is enlarged in order to permit the passage of the vapour to the condensation chamber 9 (Fig 3).

Hot water temperature 4 is heated at maximum 88 ºC in order to avoid excessive scales into the tubes. Operating evaporative temperature ranges from 60 to 65 ºC on the first stage and from 45 to 50 °C on the second. To obtain these evaporating temperatures, the pressure must be evacuated and controlled in the range of 20,0 to 25,0 kpa abs at the first stage and in the range of 9,9 to 12,4 kpa abs at the second stage. Vacuum is obtained by an eductor 10 (Fig. 1) that sucks the non condensable gases like air and carbon dioxide through the first stage vacuum outlet 11, and second stage vacuum outlet 12. Salt water at a specific designed pressure 13 (Fig. 1) is used to drive the eductor.

Boiling water and vapour rises into the tubes 8, splashing on the plate 14 (Fig. 3). Vapour flows to the second stage evaporator tubes 15 (Fig 1 and 5), here named Cylindrical Bundle Evaporator. Touching the tube walls, the vapour condenses, giving up energy to boil the second stage salt water. The condensate produced is collected on the bottom of the chamber 9 (Fig. 3) and pumped to a storage tank through the outlet 16, delivering sensible heat to the incoming salt water 6 through the bundle 17, inside chamber 7.

Second stage is fed by the remaining not vaporised first stage salt water, suctioned by the second stage lower pressure through tube 18, pouring into the tray 19, and flashing vapour. Tube 18 collects salt water from the bottom of an extended pipe, in order to keep an adequate water column, to avoid suction of vapour from the first stage. On the tray, water directs to the central tube 20, dropping to floating head 21, feeding second stage tube bundle 15. Tray 19 and plate 14 prevent rising salt water droplets to reach the demisters 22 (first stage) and 23 (second stage). Both plate 14 as tray 19 are removable in order to permit access to the tube sheets.

Second stage fresh water is obtained through the vapour condensation on condenser 2, being collected in the container 24. Through outlet nozzle 25 (Fig.1), condensate is pumped to reservoir. Inside condenser tubes circulates cold salt water through inlet nozzle 26 (Fig. 1), leaving on nozzle outlet 27. Here, a stream 4 is derived in order to feed first stage. Returned salt water 28 is discharged.

Level is maintained on the first stage by the weir 28. On the same way, second stage level is maintained by weir 29. Salt water that overboards weir 29 exits the unit through outlet 30, being suctioned by eductor 10 (Fig 1) to discharge 31 (Fig.1).

Nominal flow rate is obtained through control valve 32 and flow meter 33 (Fig.1). Instruments as thermometers and manometers are used for operational control, and a pressure safety relief valve 34 installed on the first stage grants against over pressure.

A thin steel shell 35 (Fig. 5), here named armour, which is assembled in two halves by flanges, encloses second stage tube bundle. The role of this armour is to direct the vapour to pass through the tubes, avoiding being suctioned directly to vacuum pipe 11 (Fig. 1). The welded edge 36 (Fig. 5) supports the armour at the top of the first stage inner shell 3. A gasket bonded bellow the edge avoids vapour leakage.

A cut 37 (Fig. 6) made at the bottom tube sheet and at the floating head 21, permits the passage of the fixed vacuum pipe 11.

The following description is referred to Figures 10 to 16 of the three stage model.

Three stages model (Fig. 10) has the same two stage constructive philosophy, with a new intermediate stage included, here named Ring Evaporator Bundle (Fig. 13), that becomes the second stage, and is inserted into the first stage. The cylindrical evaporator (Fig. 5), becomes now the third stage, and is inserted into the Ring Evaporator Bundle (Fig. 13).

The first stage of this model (Fig. 11) is similar to the two stage model, but the base 38 (Fig. 11) is now welded to the inner and outer shells 39 and 40 respectively (Fig. 11), in order to have a reliable watertight. At the centre of this base is welded a support 41 (Fig. 11 and 12), in order to hold and centralise the intermediate stage (Fig. 13).

On this model, vacuum lines 42 and 43 (Fig.11) and distillate outlets 44 and 45, are located bellow the unit, in order to permit easy access of second and third stages.

Heat exchange is accomplished through a 15 to 20 °C differential temperature between stages.

Ring Evaporator Bundle has also an armour 46 (Fig. 13), in order to direct the first stage vapour to its bundle 47. Floating head 48 has on this way a ring format also, as shown on figure 14 (bottom view) and figure 15 (section view). An internal shell 49 encloses and isolate the vapour inside this stage.

The material used in the unit needs to be corrosive resistant to salt water as aluminium bronze, monel, copper nickel, and titanium.

Four stages model is represented in a section view on figure 16. Now, another Ring Evaporator Bundle is included, as an intermediate stage, compounding on this way the four stage model, and so on.

## Claims

1. A multi-effect distillation apparatus for desalination of water containing dissolved solids, said apparatus having an outer tube evaporator in ring format and comprising vertical evaporator tubes (8), the apparatus also having a central cylindrical bundle (15) of likewise vertical tubes, the tubes (8) of the outer tube evaporator being included in a first effect of a multi-effect evaporator, **characterized in that** also the tubes in the central cylindrical bundle (15) are evaporator tubes and are included in a final effect of a multi-effect evaporator.

2. A multi-effect distillation apparatus according to claim 1, wherein at least one intermediate evaporator bundle of vertical evaporator tubes is located between the outer ring-shaped tube evaporator and the central cylindrical tube bundle (15), said at least one intermediate tube bundle being included in an intermediate effect of a multi-effect evaporator that is subsequent to said first effect but prior to said final effect,

3. A multi-effect distillation apparatus according to claim 2, wherein each tube bundle is supported by an upper and a bottom tube sheet and the upper tube sheet of the intermediate evaporator bundle has a diameter that is 30% larger than the diameter of the bottom tube sheet.

4. A multi-effect distillation apparatus according to claim 2 or 3, wherein a support is provided for centering the intermediate evaporator bundle.

5. A multi-effect distillation apparatus according to claim 1, wherein each tube bundle is supported by an upper and a bottom tube sheet and the upper sheet of the central cylindrical bundle (15) has a diameter that is 30% larger than the diameter of the bottom tube sheet.

## Patentansprüche

1. Eine Multi-Effekt-Destillationsvorrichtung zur Entsalzung von Wasser, das gelöste Festkörper enthält, wobei die Vorrichtung einen äußeren Rohrevaporator in Ringausführung aufweist und vertikale Evaporatorröhren (8) umfasst, wobei die Vorrichtung ebenfalls ein zentrales zylindrisches Bündel (15) ähnlicher vertikaler Röhren aufweist, wobei die Röhren (8) des äußeren Rohrevaporators in einen ersten Effekt eines Multi-Effekt-Evaporators einbezogen sind, **dadurch gekennzeichnet, dass** die Röhren in dem zentralen zylindrischen Bündel (15) Evaporatorröhren sind und in einen abschließenden Effekt eines Multi-Effekt-Evaporators einbezogen sind.

2. Eine Multi-Effekt-Destillationsvorrichtung gemäß Anspruch 1, wobei mindestens ein zwischenstufliches Evaporatorbündel vertikaler Evaporatorröhren zwischen dem äußeren ringförmigen Rohrevaporator und dem zentralen zylindrischen Rohrbündel (15) angeordnet ist, wobei das mindestens eine zwischenstufliche Rohrbündel in einen zwischenstuflichen Effekt eines Multi-Effekt-Evaporators einbezogen ist, der nachfolgend zu dem ersten Effekt aber vor dem abschließendem Effekt ist.

3. Eine Multi-Effekt-Destillationsvorrichtung gemäß Anspruch 2, wobei jedes Rohrbündel durch eine obere und eine untere Rohrplatte unterstützt ist und die obere Rohrplatte des zwischenstuflichen Evaporatorbündels einen Durchmesser aufweist, der 30% größer ist als der Durchmesser der unteren Rohrplatte.

4. Eine Multi-Effekt-Destillationsvorrichtung gemäß Anspruch 2 oder 3, wobei eine Unterstützung bereitgestellt ist, um das zwischenliegende Evaporatorbündel zu zentrieren.

5. Eine Multi-Effekt-Destillationsvorrichtung gemäß Anspruch 1, wobei jedes Rohrbündel durch eine obere und eine untere Rohrplatte unterstützt ist und die obere Platte des zentralen zylindrischen Bündels (15) einen Durchmesser aufweist, der 30% größer ist als der Durchmesser der unteren Rohrplatte.

## Revendications

1. Appareil de distillation à effets multiples destiné au dessalement d'eau contenant des solides dissous, ledit appareil ayant un évaporateur tubulaire extérieur dans un format annulaire et comprenant des tubes d'évaporateur verticaux (8), l'appareil ayant également un faisceau cylindrique central (15) de tubes verticaux similaires, les tubes (8) de l'évaporateur tubulaire extérieur étant inclus dans un premier effet d'un évaporateur à effets multiples, **caractérisé** également en ce que les tubes dans le faisceau cylindrique central (15) sont des tubes d'évaporateur et sont inclus dans un effet final d'un évaporateur à effets multiples.

2. Appareil de distillation à effets multiples selon la revendication 1, dans lequel au moins un faisceau d'évaporateur intermédiaire de tubes d'évaporateur verticaux est situé entre l'évaporateur tubulaire extérieur de forme annulaire et le faisceau de tubes cylindrique central (15), ledit au moins un faisceau tubulaire intermédiaire étant inclus dans un effet intermédiaire d'un évaporateur à effets multiples qui est ultérieur audit premier effet mais antérieur audit effet final.

3. Appareil de distillation à effets multiples selon la revendication 2, dans lequel chaque faisceau de tubes est supporté par une plaque tubulaire supérieure et inférieure et la plaque tubulaire supérieure du faisceau d'évaporateur intermédiaire présente un diamètre qui est 30 % plus grand que le diamètre de la plaque tubulaire inférieure.

4. Appareil de distillation à effets multiples selon la revendication 2 ou 3, dans lequel un support est prévu pour centrer le faisceau d'évaporateur intermédiaire.

5. Appareil de distillation à effets multiples selon la revendication 1, dans lequel chaque faisceau de tubes est supporté par une plaque tubulaire supérieure et inférieure et la plaque supérieure du faisceau cylindrique central (15) présente un diamètre qui est 30 % plus grand que le diamètre de la plaque tubulaire inférieure.
